## Europäisches Patentamt

## European Patent Office

## Office européen des brevets

(19)

(11) Veröffentlichungsnummer: **0 047 828**
**B1**

(12) **EUROPÄISCHE PATENTSCHRIFT**

(45) Veröffentlichungstag der Patentschrift:
**10.04.85**

(21) Anmeldenummer: **81105374.3**

(22) Anmeldetag: **10.07.81**

(51) Int. Cl.⁴: **H 01 R 13/447**, H 02 G 3/14, H 02 B 1/06

(54) Mehrpolige Kragensteckvorrichtung mit Deckel.

(30) Priorität: **11.09.80 DE 3034147**

(43) Veröffentlichungstag der Anmeldung:
**24.03.82 Patentblatt 82/12**

(45) Bekanntmachung des Hinweises auf die Patenterteilung:
**10.04.85 Patentblatt 85/15**

(84) Benannte Vertragsstaaten:
**AT BE CH DE FR GB IT LI LU NL SE**

(56) Entgegenhaltungen:
**DE - A - 1 540 162**
**DE - A - 1 590 103**
**DE - A - 2 456 829**
**DE - B - 1 802 146**
**FR - A - 1 586 484**

(73) Patentinhaber: **Walther-Werke Ferdinand Walther GmbH, D-6719 Eisenberg (DE)**

(72) Erfinder: **Schmitt, Werner, Beethovenstrasse 10, D-6790 Landstuhl (DE)**
Erfinder: **Weyl, Hans Peter, Pestalozzistrasse 48, D-6719 Eisenberg (DE)**
Erfinder: **Siebers, Paul, Theodor-Storm-Strasse 20, D-6719 Eisenberg-Steinborn (DE)**
Erfinder: **Kalthoff, Hans, Leininger Strasse 13 a, D-6719 Wattenheim (DE)**

(74) Vertreter: **Ratzel, Gerhard, Dr., Seckenheimer Strasse 36a, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine mehrpolige Kragensteckvorrichtung mit Schutzkontakt für Einbaumontage, mit einem Kontaktträger, an dessen Wand ein radial abstehender Ring mit Bohrungen zur Aufnahme von Schrauben, die der Verbindung von Einzelteilen der Steckvorrichtung dienen, ausgebildet ist, und der einen zur Frontseite der Steckvorrichtung gerichteten Kragen zur Bildung eines Aufnahmeschlitzes für den Steckerkragen aufweist, mit einer in Draufsicht rechteckförmigen Deckplatte, an der mittels versenkter Scharniere ein Deckel angelenkt ist, wobei jedes Scharnier wenigstens einen U-förmig ausgebildeten Scharnierarm aufweist, dessen eines Ende mit dem Deckel verbunden ist und dessen anderes Ende eine Lagerbohrung für eine in der Deckplatte gelagerte Achse aufweist, die von einer Schraubenfeder umgeben ist, die sich mit einem abstehenden Ende gegen die Deckplatte abstützt.

Aus der DE-B-1 802 146 ist eine mehrpolige Kragensteckvorrichtung mit einer Deckplatte bekannt. In der Deckplatte ist eine Spritzwasser-Auffangwanne vorgesehen, in der eine Scharnieranordnung zur Anlenkung eines Deckels vorgesehen ist. Als Scharnieranordnung ist an dem Deckel ein Scharnierarm angeordnet, der in einem Scharniergelenk auf einem Scharnierbolzen in der Deckplatte gelagert wird. Dazu besitzt das Scharniergelenk eine Lagerbohrung, in der der Scharnierbolzen unter Beilage einer Scharnierfeder aufgenommen wird. Das Scharniergelenk ist in einem relativ grossen Abstand zur Steckvorrichtung angeordnet, so dass die Kragensteckvorrichtung insgesamt vergleichsweise grosse Aussenabmessungen aufweist. Die Scharnierfeder besitzt einen kürzeren Federschenkel, der in einer Aussparung des Scharnierarmes eingeführt ist. Das Gegenende der Scharnierfeder wird an einem Noppen abgestützt, der in eine Höhlung des Scharnierarmes hineinragt. Der Noppen gehört dabei zu der Deckplatte. Das Scharniergelenk erstreckt sich über die gesamte Breite der Deckplatte bzw. der Steckvorrichtung und benötigt somit über diesen gesamten Bereich einen hinreichenden Abstand von der Steckvorrichtung. Infolgedessen wird die Steckvorrichtung insgesamt in ihren äusseren Abmessungen ausgeweitet.

Ähnliches gilt für eine Steckvorrichtung, die aus der DE-A-1 540 162 bekannt ist. Zwar sind dort vereinzelte Ausnehmungen in der Deckplatte zur Aufnahme von Scharnierarmen, die dort als Noppen bezeichnet sind, vorgesehen. Jedoch erstreckt sich zwischen diesen Ausnehmungen ein als Achse dienender Bügel, der zudem zwischen den Ausnehmungen im Bereich der Steckvorrichtung selbst eine Abkröpfung besitzt, für die ein zsätzlicher Durchbruch in der Deckplatte vorgesehen ist. In diesem Durchbruch ist eine Feder angeordnet, die an der Abkröpfung eingreift. Für den Durchbruch sowie die Abkröpfung ist ein entsprechender Platzbedarf erforderlich, wodurch entsprechend grosse Aussenabmessungen der Steckvorrichtung bedingt sind.

Auch in den Vorrichtungen nach der DE-A-2 456 829 und der DE-A-1 590 103 nimmt die Scharnieranordnung die gesamte Breite einer Seite in der Deckplatte ein und muss somit in diesem ganzen Bereich einen ausreichenden Abstand von der Steckvorrichtung haben; also wird auch hier die Steckvorrichtung durch die Scharnieranordnung in ihren Aussenmassen erheblich erweitert.

Der Erfindung liegt die Aufgabe zugrunde, eine mehrpolige Kragensteckvorrichtung der eingangs genannten Art dahingehend abzuändern, dass der Abstand der Scharniere zur eigentlichen Steckvorrichtung verringert und damit insgesamt eine grössere Kompaktheit der Steckvorrichtung erzielt werden kann.

Die Lösung dieser Aufgabe besteht darin, dass in der Deckplatte im Bereich zweier benachbarter Ecken je eine jeweils ein Scharnier eng umfassende Scharnierwanne ausgebildet ist, dass jede Scharnierwanne eine zur parallel zur Scharnierachse verlaufenden Mittellinie der Deckplatte hin gerichtete schlitzartige Verlängerung zur Aufnahme des Scharnierarmes aufweist, dass die schlitzartige Verlängerung an der Seite der Scharnierwannen ausgebildet ist, die der benachbarten Aussenkante der Deckplatte zugewandt ist, und dass die dieser Scharnierwanne zugeordnete Scharnierachse mit ihrem einen Ende in dieser Aussenkante gelagert ist und mit ihrem anderen Ende die Lagerbohrung des zugehörigen Scharnierarmes nicht vollständig durchragt.

Bei der erfindungsgemässen mehrpoligen Kragensteckvorrichtung kann der Deckel ungehindert die gesamte Stirnseite abdecken, wobei die Scharniere auch nicht über die Ränder der Stirnseite hervorstehen. Eine im Vergleich mit bekannten Vorrichtungen grössere Kompaktheit wird erreicht. Bei der Anordnung von mehreren Kragenvorrichtungen können die eigentlichen Steckvorrichtungen sehr nahe beieinander liegen und bei einem vergleichsweise geringen Platzbedarf wird ein sperriger Eindruck insgesamt vermieden. Die Scharnierschlitze befinden sich auf der dem Kragen am weitesten entfernt liegenden Seite der jeweiligen Scharnierwanne und die Fläche der Deckplatte wird somit von den Scharnierwannen und den Scharnierschlitzen besonders raumsparend augenutzt.

Die Erfindung wird nachfolgend anhand des in der Zeichnung dargestellten Ausführungsbeispiels näher erläutert. Es zeigen:

Figur 1 eine Aufsicht auf die Deckplatte des Abdeckrahmens der Kragensteckvorrichtung;

Figur 2 den Querschnitt entlang der Schnittlinie A–B in Figur 1 durch den Abdeckrahmen;

Figur 3 die Seitenansicht auf den erfindungsgemässen Abdeckrahmen mit zugeklapptem Deckel von C in Figur 1 aus gesehen;

Figur 4 den Querschnitt durch den Deckel der erfindungsgemässen Kragensteckvorrichtung, der durch ein Scharniergelenk gelegt ist;

Figur 5 den Querschnitt durch ein Scharniergelenk, wie es in der Scharnierwanne im Abdeckrahmen angeordnet ist; der Querschnitt ist hierbei senkrecht zu der Deckeloberfläche geführt;

Figur 6 ein Querschnitt wie in Figur 5, jedoch mit Schnittrichtung parallel zur Deckeloberfläche in Höhe der Achse;

Figur 7 den Querschnitt durch die erfindungsgemässe Kragensteckvorrichtung in einer Aufputzdose.

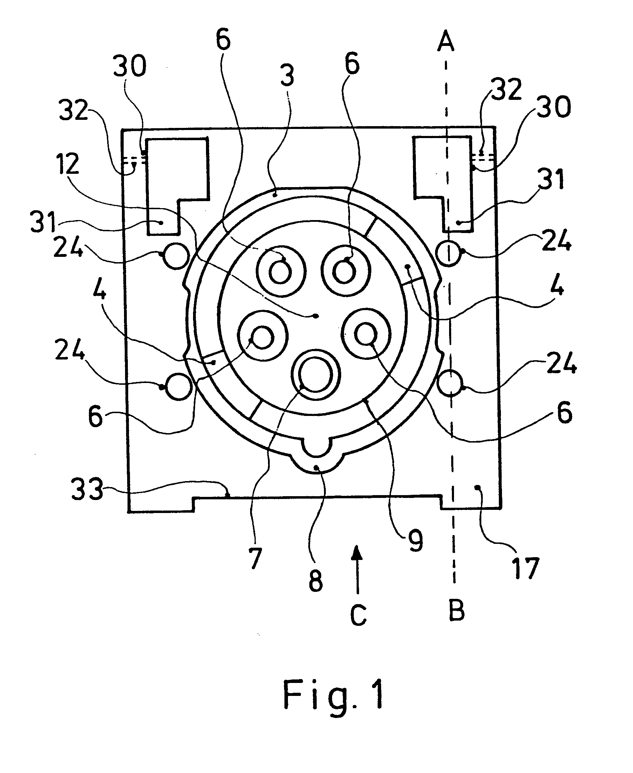

In Figur 1 ist in der Draufsicht deutlich in der Mitte der Deckplatte (17) der Kontaktträger (12) zu erkennen. Der Kontaktträger (12) weist die nach den DIN-Normen vorgegebenen Phasenkontakte (6) sowie den Schutzkontakt (7) auf. Er ist an seiner Rückseite über die Brücken (4) mit dem Kragen (3) einstückig verbunden. Zwischen dem Kragen (3) und der Wand (9) ist ein Schlitz zur Aufnahme des Steckerkragens frei. Benachbart zu dem Kragen (3) sind die Abdeckrahmenbohrungen (24) angeordnet. Auf der einen Seite am Rand der Deckplatte (17) ist eine Griffaussparung (33) eingeformt. An der gegenüberliegenden Seite der Deckplatte sind die Scharnierwannen (30) angeordnet. Es handelt sich dabei um Vertiefungen in der Deckplatte (17). Diese Scharnierwannen (30) sind zu der Griffaussparung (33) hin durch Scharnierschlitze seitlich verlängert. Die befinden sich auf der vom Kragen (3) entfernter liegenden Seite der Scharnierwannen (30). Parallel zur Griffaussparung (33) sind in den Seitenwandungen der Scharnierwannen (30) Achsenbohrungen (32) angeordnet, die diese Seitenwandungen bis auf die Aussenseite des Randes der Deckplatte (17) durchtreten.

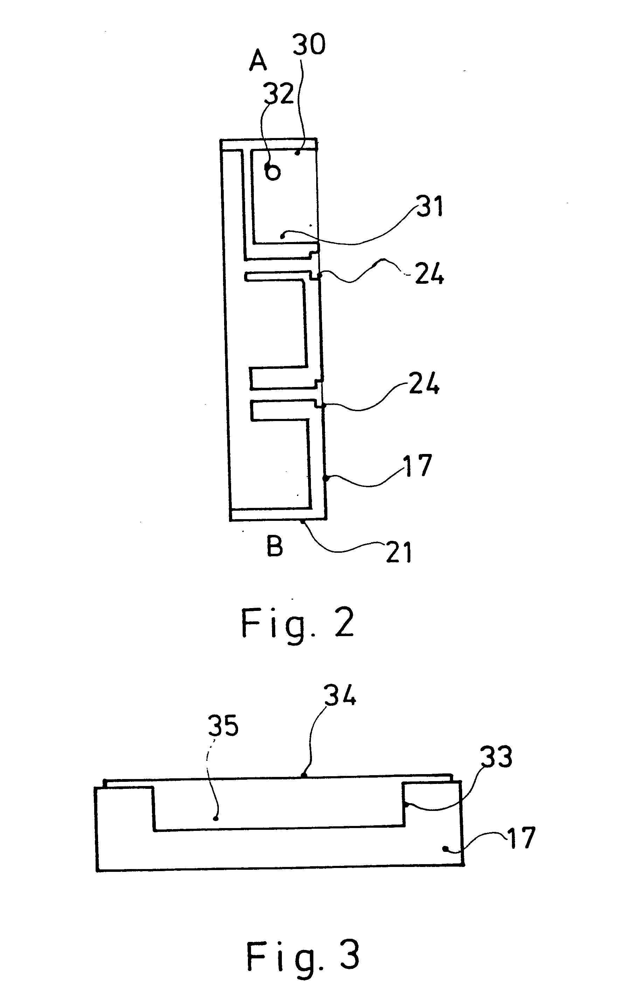

In Figur 2 ist ein Schnitt entlang der Schnittlinie A–B in Figur 1 durch den Abdeckrahmen (21) gezeigt. Die Achsenbohrung (32) ist hier nun in Draufsicht deutlich zu erkennen. Die Scharnierwanne (30) ist in Höhe des Scharnierschlitzes (31) von der Zeichenebene geschnitten; der Scharnierschlitz (31) endet nahe bei der einen Abedeckrahmenbohrung (24); diese Abdeckrahmenbohrung (24) durchtritt den Abdeckrahmen vollständig. Entsprechendes gilt für die andere Abdeckrahmenbohrung (24). Sie ist in Höhe der Deckplatte (17) durch ein Senkloch für eine Zylinderkopfschraube abgeschlossen. Der Abdeckrahmen (21) ist als Profilteil, z.B. aus Kunststoff, gespritzt. Dies ist in Figur 2 deutlich zu erkennen.

In Figur 3 ist eine Seitenansicht der erfindungsgemässen Kragensteckvorrichtung abgebildet. Dabei wird von C aus in Figur 1 die Seite mit der Griffaussparung (33) in der Deckplatte (17) betrachtet. In der Griffaussparung (33) liegt die verlängerte Deckelzunge (35), die an den Deckel (34) angeformt ist. In dieser Griffaussparung (33) kann der Benutzer den Deckel (34) an der Deckelzunge (35) erfassen und anschliessend hochklappen.

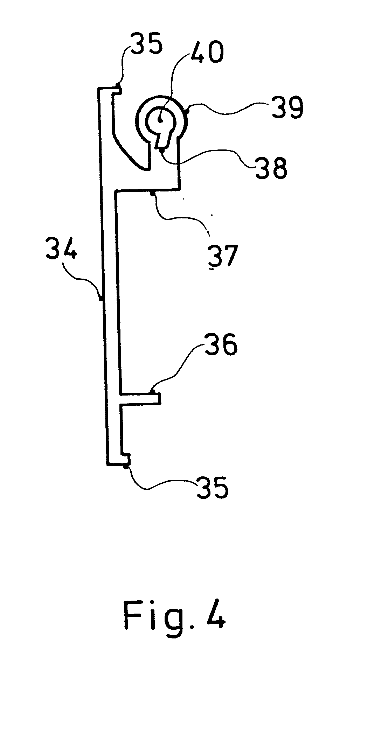

In Figur 4 ist der Querschnitt durch einen Deckel (34) gezeichnet. Die Schnittlinie liegt dabei so, dass ein Scharniergelenk (39) geschnitten wird. Das Scharniergelenk (39) befindet sich seitlich am Deckel (34), so dass es in eine der Scharnierwannen (30) in der Deckplatte (17) angeordnet werden kann, während der Deckel (34) selbst die gesamte Stirnseite der erfindungsgemässen Kragensteckvorrichtung, wie sie in Figur 1 abgebildet ist, abdecken kann. Der Deckel (34) selbst ist wie eine flache Platte ausgebildet. An seinen Rändern sind Deckelzungen (35) rechtwinklig zur Deckeloberfläche (34) angeformt; sie stehen auf die Innenseite, das heisst zur Seite des Scharniergelenks (39) hin hervor. Diese Deckelzungen (35) können die Deckplatte (17) allseitig überlappen. Das Scharniergelenk (39) selbst ist an einem Scharnierarm (37) angeordnet. Der Scharnierarm (37) steht senkrecht vom Deckel (34) ab. Wiederum senkrecht dazu zu dem einen Rand des Deckels (34) hin ist das Scharniergelenk (39) angeordnet. Das Scharniergelenk (39) hat zylindrische Form, von der im Querschnitt nur die Kreisform zu erkennen ist. In dem Scharniergelenk (39) ist eine Lagerbohrung (40) angeordnet. Die Lagerbohrung (40) setzt sich zum Scharnierarm (37) in einem Halteschlitz (38) fort. Der Scharnierarm (37) ist zwischen dem Scharniergelenk (39) und der Innenseite des Deckels (34) ausgespart. Auf der Innenseite des Deckels (34) ist die hervorstehende Verriegelungsnase (36) zum Verriegeln der Haltenase eines entsprechenden Steckers angeordnet.

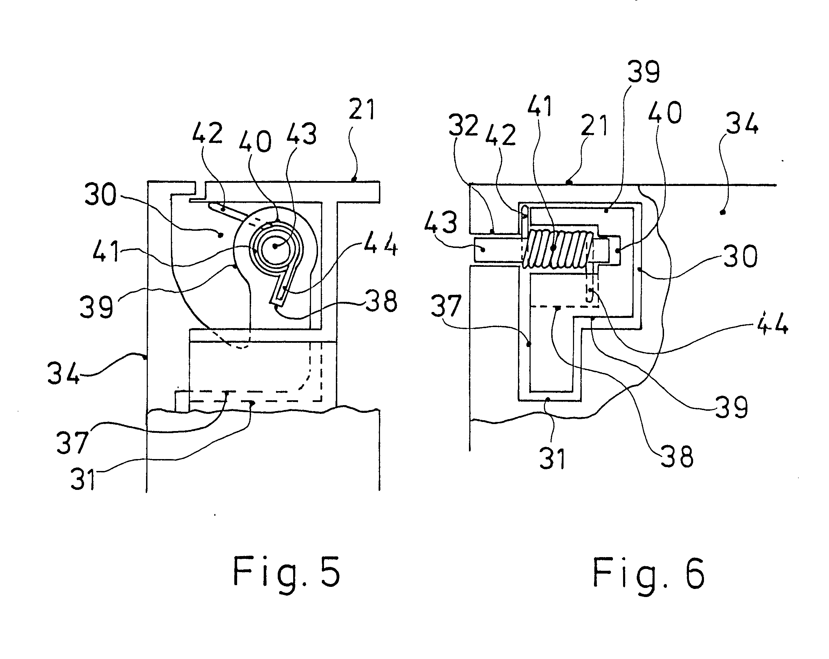

In Figur 5 ist ein Querschnitt durch das Scharniergelenk (39) gezeichnet, wie es in der Scharnierwanne (30) angeordnet ist; die Schnittebene steht dabei senkrecht zur Oberfläche des Deckels (34). Zweck der Aussparung des Scharnierarmes (37) zwischen dem Scharniergelenk (39) und der Innenseite des Deckels (34) ist es, beim Hochklappen des Deckels (34) dem Rand des Abdeckrahmens (21) Spielraum zu geben. Die Achse (43) ist in der Achsenbohrung (32) sowie der Lagerbohrung (40) angeordnet. Auf der Achse (43) ist in der Lagerbohrung (40) des Scharniergelenkes (39) eine Schraubenfeder (41) angeordnet. Das Gegenende (42) der Schraubenfeder schlägt an die Wand der Scharnierwanne (30) an; der Haltearm (44) der Schraubenfeder (41) ist in dem Halteschlitz (38) an der Lagerbohrung (40) angeordnet. Die Schraubenfeder (41) ist nun so gespannt, dass das Gegenende (42) gegen die Wand der Scharnierwanne (30) drückt und dass der Haltearm (44) in dem Halteschlitz (38) in einem Drehsinn von dem Gegenende (42) weg gegen den Scharnierarm (37) drückt. Dadurch bleibt der Deckel (34) immer zwangsläufig gegen die Deckplatte (17) gedrückt.

In Figur 6 ist ein Querschnitt durch ein Scharniergelenk in einer Scharnierwanne (30) wie in Figur 5 gezeichnet; jedoch ist in Figur 6 die Schnittebene parallel zur Oberfläche des Deckels (34) in Höhe der Achse (43) gelegt. Deutlich ist die Schraubenfeder (41) zu erkennen. Das Gegenende (42) liegt in dem Spalt zwischen dem Scharniergelenk (39) und der Wand der Scharnierwanne (30) in dem Abdeckrahmen (21). Die Achse (43) liegt in der Lagerbohrung (40) und der Achsenbohrung (32). Die Lagerbohrung (40) besitzt in dem zur Achsenbohrung (32) benachbarten Teil eine Erweiterung ihres Durchmessers zur Aufnahme der Schraubenfeder (41). Der Halteschlitz (38) schliesst sich daran seitlich in dem Scharnierarm (37) an. In ihm ist der Haltearm (44) angeordnet. Der Halteschlitz (38) ist auf der zu der Seitenwandung der Scharnierwanne (30) benachbarten Seite des Scharniergelenkes (39) offen. Der Scharnierarm (37) liegt in dem Scharnierschlitz (31), der die Scharnierwanne (30) auf der zu dem Gegenende (42) der Schraubenfeder (41) entgegengesetzten Seite verlängert.

In Figur 7 ist die Anordnung des Abdeckrahmens (21) mit einem Kontaktträger in einer Aufputzdose (22) abgebildet. Dies entspricht der Anordnung eines Abdeckrahmens gemäss der DE-A-3 011 762. In der Abdeckrahmenbohrung (24) ist eine Zylinderschraube (10) versenkt angeordnet. Sie durchtritt die Bohrung (2) in dem Ring (1) des Kontaktträgers. Sie ist mit ihrem Gewindeende in der Gewindesäule (22) verschraubt. Zwischen dem Abdeckrahmen (21) und dem Ring (1) ist eine Dichtung (20) angeordnet. Der Kontaktträger (12) mit dem Kragen (3) schliesst ungefähr bündig mit der Deckplatte (17) ab. Der Ring (1) ist in der Gewindesäule (22) mittels einer Schraube (29), die in der Bohrung (2) angeordnet ist, verschraubt. Diese Schraube (29) wird von der Dichtung (20) abgedeckt.

Der radiale Ring (1) kann auch viereckig, vorzugsweise quadratisch, ferner n-eckig, beispielsweise achteckig oder zwölfeckig und ferner beispielsweise elliptisch ausgebildet sein. Die Hauptausführungsform des radialen Rings (1) ist die kreisrunde Ausgestaltung.

Zeichenerklärung

  1  Ring
  2  Bohrung
  3  Kragen
  4  Brücke
  6  Phasenkontakt
  7  Schutzkontakt
  8  Nut
  9  Wand
 10  Zylinderschraube
 12  Kontaktträger
 17  Deckplatte
 20  Dichtung
 21  Abdeckrahmen
 22  Gewindesäule
 23  Aufputzdose
 24  Abdeckrahmenbohrung
 30  Scharnierwanne
 31  Scharnierschlitz
 32  Achsenbohrung
 33  Griffaussparung
 34  Deckel
 35  Deckelzunge
 36  Verriegelungsnase
 37  Scharnierarm
 38  Halteschlitz
 39  Scharniergelenk
 40  Lagerbohrung
 41  Schraubenfeder
 42  Gegenende
 43  Achse
 44  Haltearm

**Patentanspruch**

1.  Mehrpolige Kragensteckvorrichtung mit Schutzkontakt (7) für Einbaumontage, mit einem Kontaktträger (12), an dessen Wand ein radial abstehender Ring (1) mit Bohrungen (2) zur Aufnahme von Schrauben (10, 29), die der Verbindung von Einzelteilen der Steckvorrichtung dienen, ausgebildet ist, und der einen zur Frontseite der Steckvorrichtung gerichteten Kragen (3) zur Bildung eines Aufnahmeschlitzes für den Steckerkragen aufweist, mit einer in Draufsicht rechteckförmigen Deckplatte (17), an der mittels versenkter Scharniere ein Deckel (34) angelenkt ist, wobei jedes Scharnier wenigstens einen U-förmig ausgebildeten Scharnierarm (37) aufweist, dessen eines Ende mit dem Deckel (34) verbunden ist, und dessen anderes Ende eine Lagerbohrung (40) für eine in der Deckplatte (17) gelagerte Achse (43) aufweist, die von einer Schraubenfeder (41) umgeben ist, die sich mit einem abstehenden Ende (42) gegen die Deckplatte (17) abstützt, dadurch gekennzeichnet, dass in der Deckplatte (17) im Bereich zweier benachbarter Ecken je eine jeweils ein Scharnier eng umfassende Scharnierwanne (30) ausgebildet ist, dass jede Scharnierwanne (30) eine zur parallel zur Scharnierachse (43) verlaufenden Mittellinie der Deckplatte (17) hin gerichtete schlitzartige Verlängerung (31) zur Aufnahme des Scharnierarmes (37) aufweist, dass die schlitzartige Verlängerung (31) an der Seite der Scharnierwannen (30) augebildet ist, die der benachbarten Aussenkante der Deckplatte (17) zugewandt ist, und dass die dieser Scharnierwanne (30) zugeordnete Scharnierachse (43) mit ihrem einen Ende in dieser Aussenkante gelagert ist und mit ihrem anderen Ende die Lagerbohrung (40) des zugehörigen Scharnierarmes (37) nicht vollständig durchragt.

**Claim**

1.  A multi-pole shrouded connector device, with a safety contact (7), for built-in installation, with a contact carrier (12), on the wall of which is formed a radially projecting ring (1) having bores (2) for accommodating screws (10, 29) which serve to secure together individual parts of the connector device, and which has a collar (3) directed towards the front side of the connector device so as to form an accommodating slot for a plug collar, with a cover plate (17) which is rectangular in plan view and to which a cover (34) is pivoted by means of recessed hinges, each hinge having at least one U-shaped hinge arm (37), one end of which is connected to the cover (34) and the other end of which has a mounting hole (40) for a pivot (43) mounted in the cover plate (17), the pivot being surrounded by a helical spring (42) which at one projecting end bears against the cover plate (17), characterised in that hinge troughs (30) each closely embracing a respective hinge are formed in the cover plate (17) in the vicinity of two adjacent corners, in that each hinge trough (30) has a slot-like extension (31) directed towards a centre line of the cover plate (17) which extends parallel to the hinge pivot (43), which extension serves to accommodate the hinge arm (37), in that the slot-like extension (31) is formed on that side of the respective hinge trough (30) which is nearest the adjacent outer edge of the cover plate (17), and in that the hinge pivot (43) associated with each hinge trough (30) is mounted with one end in that outer edge and with its other end it does not completely penetrate the mounting hole (40) of the associated hinge arm (37).

**Revendication**

1. Dispositif multipolaire enfichable à contact de protection (7) pour montage encastré, comprenant un support de contacts (12) sur la paroi duquel est constitué un anneau (1) faisant saillie radialement et comportant des alésages (2) pour la réception de vis (10, 29) servant à la liaison de parties individuelles du dispositif enfichable, et présentant un collet (3) orienté en direction du côté frontal du dispositif enfichable en vue de la formation d'une fente de réception pour le collet d'enfichage, une plaque de recouvrement (17) dont la forme en plan est rectangulaire, à laquelle est articulé un couvercle (34) au moyen de charnières enfoncées, chaque charnière présentant au moins un bras de charnière (37) en forme de U, dont une extrémité est reliée au couvercle (34) et dont l'autre extrémité présente un alésage de montage (40) pour un axe (43) monté dans la plaque de recouvrement (17), qui est entouré par un ressort hélicoïdal (41) s'appuyant par une extrémité en saillie (42) contre la plaque de recouvrement (17), caractérisé en ce qu'une cuvette à charnière (30) entourant étroitement une charnière est constituée respectivement dans la région de deux coins voisins, en ce que chaque cuvette à charnière (30) présente un prolongement (31) en forme de fente dirigé vers l'axe de la plaque de recouvrement (17) qui est parallèle à l'axe (43) de la charnière et destinée à la réception du bras (37) de la charnière, en ce que le prolongement en forme de fente (31) est constitué sur le côté des cuvettes à charnière (30) qui est tourné vers l'arête externe voisine de la plaque de recouvrement (17) et en ce que l'axe de charnière (43) qui est associé à ladite cuvette à charnière (30) est supporté par l'une de ses extrémités dans ladite arête externe et ne traverse pas complètement par son autre extrémité l'alésage de montage (40) du bras de charnière associé (37).

Fig. 1

Fig. 2

Fig. 3

Fig. 4

Fig. 5

Fig. 6